(19) Europäisches Patentamt
European Patent Office
Office européen des brevets

(11) Publication number: **0 321 126 B1**

(12) **EUROPEAN PATENT SPECIFICATION**

(45) Date of publication of patent specification: **16.03.94**

(51) Int. Cl.5: **C08K 5/00**, C08L 67/02, //(C08K5/00,5:52,5:29,5:13)

(21) Application number: **88311428.2**

(22) Date of filing: **02.12.88**

(54) **Stabilizer system for extrudable polyester blends.**

(30) Priority: **16.12.87 US 133852**

(43) Date of publication of application:
**21.06.89 Bulletin 89/25**

(45) Publication of the grant of the patent:
**16.03.94 Bulletin 94/11**

(84) Designated Contracting States:
**DE FR GB**

(56) References cited:
**EP-A- 0 019 349**
**GB-A- 2 098 231**
**US-A- 4 066 611**
**FR-A- 2 311 806**
**US-A- 3 703 496**
**US-A- 4 259 458**

(73) Proprietor: **FORD MOTOR COMPANY LIMITED**
**Eagle Way**
**Brentwood Essex CM13 3BW(GB)**
(84) Designated Contracting States:
**GB**

(73) Proprietor: **FORD-WERKE AKTIENGESELL-SCHAFT**

**D-50725 Köln(DE)**
(84) Designated Contracting States:
**DE**

(73) Proprietor: **FORD FRANCE S. A.**
**B.P. 307**
**F-92506 Rueil-Malmaison Cédex(FR)**
(84) Designated Contracting States:
**FR**

(72) Inventor: **Van Oene, Henk**
**25355 Shiawassee Circle**
**205 Southfield Michigan 48034(US)**
Inventor: **Cheung, Mo-Fung**
**28118 Gettysburg**
**Farmington Hills Michigan 48331(US)**
Inventor: **Golovoy, Amos**
**7865 Royal Court North**
**Canton Michigan 48187(US)**

(74) Representative: **Messulam, Alec Moses et al**
**A. Messulam & Co.**
**24 Broadway**
**Leigh on Sea Essex SS9 1BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention is directed to a mouldable composition comprising a polymer blend containing polyester and a stabiliser system useful to retard transesterification in the polymer blend during processing thereof at a temperature above 285 °C.

Blending two or more plastic polymeric materials to achieve certain specific properties has become an important technology. Such polymer blends can be thought of as macromolecular plastic alloys. The polymeric materials of the blend are chosen so as to optimise the properties of the blend. For example, a high glass transition temperature ($T_g$) polymer characterised by exceptional toughness and poor solvent resistance might be blended with a polymer which has excellent solvent resistance but a lower $T_g$, where the latter polymer along exhibits poor mechanical properties, e.g., tensile and flexural modulus. The resulting blend would be expected to have properties intermediate those of the individual blend constituents, the particular properties dependent on the proportions of the constituents.

Polyesters having aromatic moieties, e.g., polyarylates, are often employed as at least one of the polymers in such blends. Polyarylates are high temperature, high performance polymers which have a good combination of thermal and mechanical properties. Additionally polyarylates have inherent combustion resistance as well as good weatherability. They also have good melt stability at high temperatures and good color retention. Still further, they have good processability which allows them to be molded into a variety of articles. Polyarylates have been blended with a number of other polymers, such as ABS resins (US-A-3,792,118), polycarbonate resins (US-A-3,792,115), polyurethane resins, methacrylate resins, etc. When there is an extreme of viscosity difference between a high viscosity polyarylate and the other polymer, severe service irregularities (e.g., jetting) are observed when these blends are injection molded. This is observed especially when polyarylate is blended with, for example, ABS resins and poly(methyl methacrylate) resins. Additionally, the extremely high viscosity of polyarylates prevents a uniform of product from being obtained by conventional polymer techniques, i.e., extrusion or Banbury type melt mixing, when the polyarylate is blended with a resin having a lower viscosity. The non-uniform blend will not weather as well as the uniform blend of the resins nor will it have an acceptable balance of properties. Still further, the inclusion of lower molecular weight constituents (which generally have lower melt viscosities) in order to lower the melt viscosity of the blend and make the blend more processable is generally at the expense of physical properties of the blend such as toughness. Therefore, it is preferred that the blend comprise constituents having molecular weights and melt viscosities similar to the polyarylate, e.g., polycarbonate. However, the relatively high melt viscosities of such blends makes them difficult to process at normal processing temperatures, i.e., normally below about 285 °C. It is well known that the processability of such blends can be improved if the blends are molded at higher temperatures. However, at such higher temperatures, exchange reactions, such as alcoholysis, acidolysis, and transestification, among the polyester(s) generally take place. Such reactions may take place when one or two or more different polyesters are present in the blend. The extent of such reactions affects the ultimate properties of the blend. In transestification, an exchange of the ester moiety between two similar or different polyester molecules takes place which generates new molecular configurations, and hence a new composition. Transestification during the melt-mixing of such blends results in poor mechanical properties and loss of crystallinity if the polyester is a semi-crystalline material. The product becomes embrittled and loses impact strength as compared to a product made from the same polymer blend in which transesterification did not occur.

It is known that in blends containing polyesters, a residual catalyst generally remains from the polymerization which may accelerate, e.g., ester-carbonate, interchange reactions in the melt state. In Chemistry of Miscible Polycarbonate-Copolyester Blends, Smith, Barlow and Paul, Journal of Applied Polymer Science, Vol. 26, 4233-4245 (1981), it is taught that interchange reactions are greatly suppressed by deactivating the residual titanium catalyst with arsenic oxide additive. Usually, however, rather than adding compounds in an attempt to deactivate catalyts, workers in the art add any of numerous compounds to such polymer blends to improve the physical properties thereof. For example, in US-A-4,066,611, it is taught that particular phosphorous compounds may be incorporated into a bisphenol A polycarbonate/poly-(tetramethylene terephthalate) blend to enhance the mechanical properties of the blend. US-A-4,0066,611 discloses that cyclic diphosphite compounds can improve the thermal-oxidative stability and hydrolytic stability of aromatic carbonate polymer compositions. However, attempts to prevent transesterification of polymer blends containing polyester during processing at elevated temperatures above about 280 °C have been less than successful.

It is an object of the present invention to provide a stabilizer system capable of retarding transesterification of ester containing polymer blends during melt-mixing and molding, particularly at the higher

temperatures generally necessary to effectively process such blends. We have found an effective stabilizer system comprising phosphite as the first component and a carbodiimide compound as the second component, which system retards transestification even at higher working temperatures (i.e., 285 °C and above). Use of this stabilizer system in polyester containing polymer blends allows them to be processed at higher temperatures without any deterioration in properties. The stabilizer system may further comprise a hindered phenol as a third component which provides thermal stability to the blend and is particularly useful at processing temperatures above about 300 °C.

According to the invention there is provided a mouldable composition comprising a polymer blend containing a polyester and a stabiliser system for retarding transesterification in the polymer blend during processing thereof at a temperature above 285 °C, wherein the stabiliser system comprises:

(A) phosphite compound;

(B) carbodiimide compound and optionally,

(C) hindered phenol compound,

wherein said stabiliser system comprises at least 51 weight percent phosphite compound.

Preferably, the stabiliser system comprises between 51 and 75 weight percent of phosphite compound.

One embodiment of such compositions comprises, in addition to the stabiliser system, a polymer blend of:

(I) aromatic component selected from the group consisting of: polysulfone, polyarylsulfone, polyether ketone, polyester ether ketone and polyarylate, wherein the polyarylate is the reaction product of at least one dihydric phenol and at least one aromatic dicarboxylic acid;

(II) polyester being the reaction product of an aliphatic or cycloaliphatic diol, or mixtures thereof and at least one aromatic dicarboxylic acid; and

(III) at least one thermoplastic polymer selected from the group consisting of an aromatic polycarbonate, a styrene resin, a vinyl chloride polymer, a poly(arylether), a copolyetherester block copolymer, and a polyhydroxyether.

Preferably, at least (II) or (III) has the ability to crystallise upon cooling.

The above defined polymer blend composition usually comprises 0.1 weight percent phosphite component, preferably between 0.1 and 3 weight percent, more preferably between 0.25 and 0.75 weight percent of the phosphite component. Additionally, the stabiliser system usually comprises at least 0.01 weight percent of the reactive functionality component, preferably between 0.01 and 1 weight percent, more preferably between 0.1 and 0.5 weight percent of this second component. When a hindered phenol is employed in such compositions, the stabiliser system usually comprises at least 0.01 weight percent of the hindered phenolic component, preferably between 0.1 and 1 weight percent, more preferably between 0.1 and 0.5 weight percent of this optional component. The weight percent of each stabiliser system component is based on the weight of the polymer blend of the composition. Preferably the composition comprises a blend of polyarylate, polyethylene terephthalate and polycarbonate.

Advantageously, the stabilizer system of this invention retards transesterification in polymer blends comprising polyester which allows the blends to be desirably processed at temperatures above 285 °C with substantially no change in physical properties. Since the polymer blend can be processed at higher temperatures, it may advantageously be composed of polymers having higher molecular weights, which polymers generally also have more desirable physical properties, such as toughness and impact resistance. As pointed out above, such high molecular weight polymers have melt viscosities at normal processing temperatures which preclude their use in most applications. While the phosphite is somewhat useful by itself to retard transesterification of polyester blends at moderate temperatures up to about 280 °C, the combination of the phosphite with the reactive functionality component provides a stabilizer system which has unexpected stabilizing properties capable of preventing transesterification, even at temperatures higher than about 285 °C, and even above about 300 °C. At these higher temperatures, the phosphite stabilizer by itself is not effective to prevent transesterification of polyester blends.

The stabilizer system of this invention retards transestification of the polyester present in the polymer blend during processing, i.e., melt-mixing and molding, of the blend. Because transestification is substantially prevented and the polyester present in the blend does not undergo any significant change in its structure during processing, it is now possible to recycle in a second transformation, the polymer scrap produced by the first transformation. Moreover, the same mechanical and thermal properties can be obtained independent of the length of time the blend composition is maintained at the high temperature in the molding apparatus, e.g., an extruder, which time can vary considerably depending on the type and size of the part being molded as well as the molding technique employed. Presently, in order to somewhat limit the deterioration of compositions comprising polyester, the are maintained at elevated temperatures for relatively short periods of time. Incorporating the stabilizer system of this invention into polymer blends

comprising polyester allows the composition to be processed at higher temperatures and for longer periods of time without any significant change in the physical properties of the polymer blend, which has definite commercial advantages, For example, we have found that a polyarylate, polyethylene terphthalate, polycarbonate blend comprising an phosphite/carbodiimide/hindered phenolic stabilizer system has excellent thermal stability and can crystallize even after prolonged exposure to high temperatures, i.e., 30 minutes at 300 °C. The same blend without the stabilizer system loses its individual glass transition temperature as well as crystallinity even after 10 minutes at 280 °C.

The stabilizer system of this invention comprises at least two components: a phosphite component and a carbodiimide compound. If the composition is to be molded at temperatures above about 300 °C, it preferably also includes a hindered phenol component.

The phosphite component is selected from any of the various and numerous phosphite compounds or mixtures of any of them, many of which are commercially available. Included among such compounds are organophosphite compounds such as di-n-octadecyl phosphite and dibenzyl phosphite. Particularly preferred organophosphite compounds are those which contain at least on phenyl group, since such compounds containing phenyl groups generally are relatively more stable at high temperatures. Exemplary of such preferred organophosphite compounds are tris-(2,4-di-t-butyl-phenyl)-phophite, bis(2,4-di-t-bytyl-phenyl) penta-erythritol diphosphite, (tetrakis [2,4-di-t-butyl-phenyl] 4-4'biphenylenediphosphonite), triphenyl phosphite, diphenyl phosphite, decyl-diphenyl phosphite and phenyldidicyl phosphite, Exemplary or inorganic phosphites are sodium hydrogen phosphite, potassium hydrogen phosphite and calcium dihydrogen phosphite. Organophosphies, as compared to inorganic phosphites, are generally preferred for use in this invention since they are more soluble in polymer blends. Particularly preferred for the polyarylate, polyethylene terephthalate, polycarbonate polymer blend is the bis-diphosphite compound named above.

the second component of the stabilizer system of this invention comprises a compound carbodiimide which is capable of reacting with a hydroxyl or carboxyl group. The second component comprises a compound (1) having one or more of such functionalities, (2) which is soluble in the polymer blend and (3) which has thermal stability at the process ing temperatures of the blend. This compound may thus, for example, be selected from carbodiimides such as benzene,2,4,-diiso-cyanate-1,3,5-tris(1-methyl-ethyl)-homopolymer, 2,2'-dimethyl-4,4'-dinitrodiphenyl-carbodiimide,2,2',6,6'-tetrachloro-diphenylcarbodiimide, and 2,2'-dinitro-4,4'-dichloro-diphenylcarbodiimide. The first named carbodimide is preferred for use in the preferred polymer blend comprising polyarylate, polyethylene terephthalate, and polycarbonate.

The stabilizer system optionally comprises a hindered phenol. Numerous such materials are known and are commercially available, e.g., octadecyl-3,5-di-tert-butyl-4-hydroxy-hydrocinnamate, 1,3,5-tris-(4-tert-butyl-3-hydroxy-2,6-dimethylbenzyl)-1,3,5-trizaine-2,4,6-(1H,-3H,5H)-trione, and 1,3,5-trimethyl-2,4,6-tris-(3,5-di-tert-butyl-4-hydroxybenzyl) benzene, the last one being preferred in the invention composition for use with the preferred in the invention composition for use with the preferred polymer blend of polyarylate, polyethylene terephthalate and polycarbonate, The hindered phenol component, when employed as a component in the stabilizer system, serves to improve the thermal stability of the polymer blend composition employing the stabilizer system Incorporation of a hindered phenol component is particularly advantageous when the composition is to be subjected to temperatures above about 300 °C during processing e.g., during the melt-mixing or molding of the blend.

The components of the stabiliser system may be combined to form the system in any suitable manner according to techniques known to those skilled in the art. For example, the stabilizer system of this invention may be made by dry blending the stabilizer components into a powdered mixture which is then available to be dusted into the polymer blend prior to loading the composition into the melt-mixing apparatus. The order of combination of the components of the stabilizer system is not critical. Alternately, the stabilizer system components can be added individually into the composition blend or pre-compounded with one of the polymer blend components. The stabilizer can also be metered into the polymer blend composition as it is being melt-mixed in the appropriate apparatus, e.g., into an extruder barrel downstream port.

The preferred polymer blends of the invention are described now in detail.

Component I

Polysulfones that may be employed in the practice of the present invention are high molecular weight polymers containing sulfone groups. The polyarylsulfones additionally contain aromatic nuclei in the main polymer chain. Polysulfones and polyarylsulfones are rigid, strong thermoplastic materials that can be molded, extruded, and thermoformed into a variety of shapes. They are highly resistant to chemicals, heat, oxidation and hydrolysis. Numerous such materials are known to those skilled in the art and many are

commercially available. For example, the Amoco Corporation manufactures and sells polysulfones under the trademark Udel. The polyarylsulfones which may be suitably employed in the practice of this invention are commercially available from various sources, including Amoco which markets a product under the trademark UDEL polysulfone and from I.C.I. U.S. Inc. which markets such materials in various grades having different performance characteristics.

Polyether ketones and polyesterether ketones useful in the present invention as the aromatic component may be selected from any of numerous known materials of these types. Such materials are commercially available from I. C. I. U.S. Inc. under the trademark Victrex.

The polyarylates suitable for use herein are derived from a dihydric phenol and an aromatic dicarboxylic acid. Exemplary of polyarylates are those made by reaction of bisphenol-A and aromatic dicarboxylic acids such as terephthalic acid, isophthalic acid, naphlhalene dicarboxylic acid as well as mixtures thereof. The polyarylates of the present invention can be prepared by any of the well known prior art polyester forming reactions, such as the reaction of the acid chlorides of the aromatic dicarboxylic acid with the dihydric phenol, the reaction of the diaryl ester of the aromatic dicarboxylic acids with the dihydric phenols, and the reaction of the aromatic diacids with diester derivatives of the dyhydric phenol. These processes are described, for example, in US-A-3,317,464, 3,948,856, 3,780,148 and 3,842,213.

Component II

The polyesters of the extrudable composition described herein are derived from an aliphatic or cycloaliphatic diol, or mixtures thereof, containing from 2 to about 10 carbon atoms and at least one aromatic dicarboxylic acid. The polyesters as described herein can be produced by methods well known in the art. Numerous such polyester are known to those skilled in the art and many are commercially available. The preferred dicarboxylic acid employed to make the polyester is terephthalic acid or mixtures of terephthalic and isophthalic acid. The preferred polyesters are poly(1,4-cyclohexanedimethanol tere/iso/-phthalate) and a copolyester of 1,4-cyclohexanedimethanol, ethylene glycol and terephthalic acid and poly-(ethylene terephthalate). The polyester component may also comprise in minor amounts, from about 0.5 to about 2 percent by weight, of the reaction product of aliphatic acids and/or aliphatic polyols, to form copolyesters. The aliphatic polyols include glycols such as poly(ethylene glycol). Copolyesters are those derived from aliphatic dicarboxylic acids including cycloaliphatic straight and branched chain acids. In addition, there can be minor amounts of units derived from aliphatic glycols and polyols.

Component III

The thermoplastic polymers suitable for use in this invention are selected from the group consisting of an aromatic polycarbonate, a styrene resin, an alkyl acrylate resin, a vinyl chloride polymer, a poly(aryl ether), a copolyetherester block polymer, a polyhydroxyether, or mixtures thereof.

Polycarbonate

The thermoplastic aromatic polycarbonates that can be employed herein are homopolymers and copolymers and mixtures thereof which have an intrinsic viscosity of 0.40 to 1.0 dl./g. as measured in methylene chloride at 25 °C that are prepared by reacting a dihydric phenol with a carbonate precursor. The polycarbonates can be prepared by methods well known to those skilled in the art. Typical of some of the dihydric phenols that may be employed in the practice of this invention are bisphenol-A (2,2-bis(4-hydroxyphenyl) propane), bis(4-hydroxyphenyl) methane, 2,2-bis(4-dydroxy-3-methylphenyl) propane, 4,4-bis(4-hydroxyphenyl) heptane, 2,2-(3,5,3′,5′-tetrachloro-4,4′-dihydroxydiphenyl) propane, 2,2-(3,5,5′,5′-tetrabromo-4,4′-dihydroxydiphenyl)-propane, (3,3′-dichloro-4,4′-dihydroxydiphenyl) methane. It is of course, possible to employ two or more different dihydric phenols or a copolymer of a dihydric phenol with a glycol or with hydroxy or acid terminated polyester, or with a dibasic acid in the event a carbonate copolymer or inter-polymer rather than a homopolymer is desired for use in the preparation of the aromatic carbonate polymers of this invention.

The carbonate precursor may be either a carbonyl halide, a carbonate ester or a haloformate. Typical of the carbonate esters which may be employed herein are diphenyl carbonate, di-(halophenyl) carbonates, and di-(alklyphenyl) carbonates. The haloformates suitable for use herein include bis-haloformates of dihydric phenols or glycols. While other carbonate precursors will occur to those skilled in the art, carbonyl chloride, also known as phosgene, is preferred.

Styrene Resin

The styrene resins suitable for use herein are ABS type polymers, the molecules of which consist of two or more polymeric parts of different compositions that are bonded chemically. The polymer is preferably prepared by polymerizing a conjugated diene such as butadiene or a conjugated diene with a monomer copolymerizable therewith such as styrene to provide a polymeric backbone. After formation of the backbone, at least one grafting monomer and preferably two are polymerized in the presence of the prepolymerized backbone to obtain the graft polymer.

The backbone polymer, as mentioned, is preferably a conjugated diene polymer such as polybutadiene polyisoprene, or a copolymer such as butadiene styrene, butadiene-acrylonitrile, or the like. Exemplary of the monomers generally utilized in preparing the backbone of the polymer are butadiene; isoprene; 1,3-heptadiene; methyl-1,3-pentadiene; 2,3-dimethyl-1,3-butadiene; 1,3-pentadiene; 2-methyl-3-ethyl-1,3-butadiene; 2-ethyl-1,3-pentadiene; 1,3- and 2,4-hexadienes, chloro and bromo substituted butadienes such as dichlorobutadiene, bromobutadiene, dibromobutadiene, mixtures thereof, and the like. The preferred conjugated diene utilized herein is butadiene.

One group of monomers that may be polymerized in the presence of the prepolymerized backbone are preferably monovinylaromatic hydrocarbons. Examples of the monovinylaromatic compounds and substituted monovinylaromatic compounds that may be used are styrene and other vinyl substituted aromatic compounds including alkyl-, cycloalkyl-, aryl-, alkaryl-, aralkyl-, alkoxy-, aryloxy-, and other substituted vinylaromatic compounds. The preferred monovinylaromatic hydrocarbons used herein are styrene and/or a-methylstyrene.

A second group of monomers that may be polymerized in the presence of the prepolymerized backbone are acrylonitrile, substituted acrylonitrile and/or acrylic acid esters exemplified by acrylonitrile and alkyl acrylates such as methyl methacrylate. The preferred acrylic monomer used herein is acrylonitrile and the preferred acrylic acid esters are ethyl acrylate and methyl methacrylate.

In the preparation of the graft polymer, the conjugated diolefin polymer of copolymer exemplified by 1,3-butadiene polymer or copolymer comprises from about 50% by weight to about 5% by weight of the total graft polymer composition and the monomers polymerized in the presence of the backbone exemplified by styrene and acrylonitrile comprise from about 40 to about 95% by weight of the total graft polymer composition.

The second group of grafting monomers, exemplified by acrylonitrile, ethyl acrylate or methyl methacrylate, of the graft polymer composition, preferably comprise from about 10% to about 40% by weight of the total graft copolymer composition and the monovinylaromatic hydrocarbon exemplified by styrene comprise from about 30 to about 70% by weight of the total graft polymer composition.

Optionally, the elastomeric backbone may be an acrylate rubber such as one based on n-butyl acrylate, ethylacrylate, 2-ethylhexylacrylate, and the like. Additionally, minor amounts of a diene may be copolymerized in the acrylate rubber backbone to yield improved grafting with the matrix polymer.

Alkyl Acrylate Resin

The alkyl acrylate resin useful in the present invention includes a homopolymer of methyl methacrylate (i.e., polymethyl methacrylate) or a copolymer of methyl methacrylate with a vinyl monomer (e.g., acrylonitrile, N-allylmaleimide, N-vinly malemide, or an alkyl acrylate or methacrylate in which the alkyl group contains from 1 to 8 carbon atoms such as methyl acrylate, ethyl acrylate, butyl acrylate, ethyl methacrylate and butyl methacrylate). The amount of methyl methacrylate is not less than 70% by weight of this copolymer resin.

The alkyl acrylate resin may be grafted onto an unsaturated elastomeric backbone such as polybutadiene, polyisoprene, and/or butadiene or isoprene copolymers. In the case of the graft copolymer, the alkyl acrylate resin comprises greater than 50 weight percent of the graft copolymers.

Vinyl Chloride Polymers

Vinyl chloride polymers for the purpose of this invention are polyvinyl chloride and copolymers of vinyl chloride with olefinically unsaturated polymerisable compounds which contain at least 80 percent by weight of vinyl chloride incorporated therein. Olefinically unsaturated compounds which are suitable for copolymerization are, for example, vinylidene halides such as vinylidene chloride and vinylidene flouride, vinyl esters such as vinyl acetate, vinyl propionate, vinyl butyate, vinyl chloroacetate, vinyl benzoate, acrylic and -alkyl-acrylic acids and their alkyl esters, amides and nitriles, methacrylic acid, methyl methacrylate,

ethyl acrylate, 2-ethyl-hexylacrylate, butyl methacrylate, acrylamide, N-methyl acrylamide, acrylonitrile and methacrylonitrile, aromatic vinyl compounds such as styrene and vinyl naphthalene and olefinically unsaturated hydrocarbons such as ethylene, bicyclo-[2,2,1]-hepta-2-ene and bicyclo-[2,2,1]-hepta-2,5-dienes. These vinyl chloride polymers are known and can be prepared by the usual methods of emulsion, suspension, bulk or mass polymerisation. Vinyl chloride polymers which have molecular weights of 40,000 to 60,000 are preferred.

Poly(aryl ether)s

The poly(aryl ether) resin component of the blend of this invention may be described as a linear, thermoplastic polyarylene polyether polysulfone, wherein the arylene units are interspersed with ether and sulfone linkages. These resins may be obtained by reaction of an alkali metal double salt of a dihydric phenol and a dihalobenzenoid compound, either of both of which contain a sulfone linkage $-SO_2$-- between arylene groupings to provide sulfone units in the polymer chain in addition to arylene units and ether units.

Typical examples are the reaction products prepared from 2,2-bis-(4-hydroxyphenyl) propane with 4,4′-dichlorodiphenylsulfone and equivalent reaction products such as those from 4,4′-dichlorodiphenylsulfone with bisphenol of benzophenone (4.4′-dihydroxydiphenyl ketone), or the bisphenol of acetophenone [1,1-bis-(4-hydroxyphenyl) ethane], or the bisphenol of vinyl cyclohexane [1-ethyl-1-(hydroxyphenyl)-3-(4-hydroxyphenylcoclohexane)], or 4,4′-dihydroxydiphenyl sulfone or alpha, alpha′-bis(4-hydroxyphenyl)-p-diisopropylbenzene.

Copolyetherester Block Copolymer

The polyetheresters consist essentially of a multiplicity of recurring intralinear long chain and short chain ester units connected head-to-tail through ester linkages, said long chain ester units being represented by the following structure:

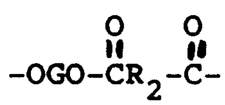

and said short chain ester units being represented by the following structure

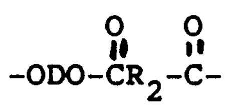

wherein: G is a divalent radical remaining after removal of terminal hydroxy groups from a poly(alkylene oxide) glycol having a molecular weight of about 400-3500: D is a divalent radical remaining after removal of hydroxyl groups from a low molecular weight diol having amolecular weight less than about 250; and $R_2$ is a divalent radical remaining after removal of carboxyl groups from a dicarboxylic acid having a molecular weight less than about 300; with the provisos that the short chain ester units constitute about 25-65% by weight of the copolyester, at least about 70% of the $R_2$ groups must be 1,4-phenylene radicals, at least about 70% of the D groups must be the 1,4-butylene radicals, and the sum of the percentages of the $R_2$ groups which are not 1,4-phenylene radicals and of the D groups which are not 1,4-butylene radicals cannot exceed about 30%.

Included among the low molecular weight diols (other than 1,4-butanediol) which react to form short chain ester units are acyclic, alicyclic and aromatic dihydroxy compounds.

Dicarboxylic acids (other than terephthalic acid) which are reacted with the foregoing long chain glycols or low molecular weight diols to produce the copolyesters of this invention are aliphatic, cycloaliphatic or aromatic dicarboxylic acids of a low molecular weight. The term "dicarboxylic acids" as used herein, includes acid equivalents of dicarboxylic acids having two functional carboxyl groups which perform substantially like dicarboxylic acids in reaction with glycols and diols in forming copolyester polymers. These equivalents include esters and ester-forming derivatives, such as acid halides and anyhydrides. The molecular weight requirement pertains to the acid and not to its equivalent ester or ester-forming derivative.

Aromatic dicarboxylic acids are a preferred class for preparing the copolyester polymers useful for compositions of this invention. Among the aromatic acids, those with 8-16 carbon atoms are preferred, particularly the phenylene dicarboxylic acids, i.e., terephthalic and isophthalic acids.

The most preferred copolyesters of this invention are those prepared from dimethylterephthalate, 1,4-butanediol and poly(tetramethylene oxide) glycol having a molecular weight from about 600-1500.

Polyhydroxyether

The thermoplastic polyhydroxyethers in the present invention have the general formula

$$\left[ D\text{-}O\text{-}E'\text{-}O \right]_n$$

wherein D is the radical residuum of a dihydric phenol, E′ is a radical residuum of an epoxide selected from mono- and diepoxides and contains from 1 to 2 hydroxyl groups and n is an integer which represents the degree of polymerization and is at least 30 and preferably is above about 80.

In general, thermoplastic polyhydroxyethers are prepared by contacting under polymerization conditions a dihydric phenol and an epoxide containing from 1 to 2 epoxide groups in substantially equimolar amounts. These polyhydroxy ethers are prepared by methods well known in the art such as those detailed in, for example, US-A-3,238,087; 3,305,528; 3,294,747, and 3,277,051.

US-A-4,259,458 is hereby expressly incorporated herein by reference for its teachings relative the materials of Components I, II and III disclosed above.

In one embodiment of the extrudable composition blend employed with the stabilizer system of the present invention, the first component (I), which is preferably a polyarylate, is preferably used in amounts of from 4 to 80, more preferably from 40 to 60 weight percent. The second component (II), the polyester, is preferably used in amounts of from 4 to 60, more preferably from 10 to 45 weight percent. The thermoplastic polymer is preferably used in amounts of from 10 to 92, more preferably from 10 to 60 weight percent.

The stabilizer system may be incorporated into the composition as described above, either before or during processing of the composition according to any of the known techniques. It should, of course, be apparent to those skilled in the art that other additives may be included in the present compositions. These additives include plasticizers; pigments; flame retardant additives, particularly, decabromodiphenyl ether and triarylphosphates, such as triphenylphosphate; reinforcing agents, such as glass fibers; thermal stabilizers; ultraviolet light stabilizers processing aids, impact modifiers and the like. The impact modifiers which can be used are described in US-A-4,231,922. These impact modifiers are a graft copolymer of a vinyl aromatic, an acrylate, an unsaturated nitrile, or mixtures thereof, grafted onto an unsaturated elastomeric backbone and having a tensile modulus (as measured by ASTM D-638, except that the test piece is compression molded to a 20 mil thickness) of less than about 100,000 psi, and preferably from about 15,000 to less than about 100,000 psi.

The invention will be further understood by referring to the following detailed examples. It should be understood that the specific examples are presented by way of illustration and not by way of limitation.

The following tests are used to evaluate the blends made according to the examples herein.

Differential Scanning Calorimetry (DSC) is used to evaluate the stability of the blends. The criteria for stability are the retention of the crystalline heat of fusion and the melting point of the polyethylene terephthalate. The glass transition temperatures of polycarbonate and polyarylate may essentially be masked by the cold crystallization exotherm of the polyethylene terephthalate. Two evaluation schemes are designed as outlined in the following:

(i) Isothermal Test

The sample is first rapidly scanned at a rate of 20 °C/min. and then isothermally held at the maximum temperature for a specific period of time. The sample is then cooled to ambient temperature and rescanned at a slower rate of 5 °C/min. from 30 °C to 280 °C.

(ii) Cycle Test

In this test, the sample is repetitively scanned from 30 °C to 280 °C at 5 °/min. At the end of each cycle, the sample is quickly cooled to 30 °C (usually it takes about 3 min.).

Example 1 (comparative)

The following ingredients are premixed and dried in a vacuum oven at 110 °C:

| Raw Materials | Parts by Weight |
|---|---|
| Ardel[1] (D-100) | 50 |
| Calibre[2] (300-15) | 20 |
| Cleartuf[3] (1006B) | 30 |

[1]Trademark, Amoco Performance Products, Inc., Ridgefield, CT, polyarylate
[2]Trademark, Dow Chemical Co., Midland, MI, polycarbonate
[3]Trademark, Goodyear Tire and Rubber Co., Akron, OH, polyethylene terephthalate

The mixture is then charged into a Haake mini extruder and extruded to form a polyester blend. The maximum temperature setting for the extruder is 285 °C. (The procedure of this example for making and extruding a polyester blend extrudate is also followed in the examples set forth below unless otherwise indicated therein.)

The heat of fusion ($\Delta H_f$) of the extrudate is between 12-15 J/g and the melting point (Tm) is between 250 °C and 255 °C during the first cycle of the DSC cycle test. The results of second and third cycles of the test performed on samples of the extrudate are listed below:

| Cycle | $\Delta H_f$(J/g) | Tm (°C) |
|---|---|---|
| 2nd. | 14.9 | 253.0 |
| 3rd. | 5.4 | 239.1 |

The result of a DSC isothermal test performed on samples of the extrudate after 10 min. at 300 °C gives essentially no heat of fusion and reveals a glass transition temperature (Tg) at about 115-120 °C which is a strong indication that an extensive ester exchange reaction took place.

Example 2 (comparative)

A concentrate of polycarbonate and phosphite is prepared as follows. A mixture of 90 parts of polycarbonate (Calibre 300-15, trademark, Dow Chemical Co.) and 10 parts of a organophosphite (Ultranox 624, trademark, Borg Warner Chemicals Inc., Parkersburg, W. VA) with 0.2% of epoxidized soybean oil (Plascheck 775, trademark, Ferro Corp., Cleveland, OH) is extruded through a twin-screw extruder. The maximum temperature setting in the extruder is 250 °C. The extrudate is quenched in a water trough and pelletized.

The concentrate prepared above is employed in making a polyester blend/phosphite extrudate as follows:

| Raw Materials | Parts by Weight |
|---|---|
| Ardel (D-100)[1] | 50 |
| Caliber (300-15)[2] | 15 |
| Cleartuf (1006B)[3] | 30 |
| Concentrate from A | 5 |

[1]Trademark, Amoco Performance Products, Inc., polyarylate

[2]Trademark, Dow Chemical Co., polycarbonate

[3]Trademark, Goodyear Chemicals, polyethylene terephthalate

Samples of the polymer blend containing phosphite (extruded at 285 °C) are subjected to testing by DSC, both isothermally and in cycles. The results are listed below:

| | | $\Delta H_f$(J/g) | Tm(°C) |
|---|---|---|---|
| Isothermal Test: | Original<br>30 min./300 °C | 12.2<br>10.2 | 249.0<br>245.7 |
| Cycle Test: | 2nd. Cycle<br>8th. Cycle | 12.9<br>13.8 | 253.7<br>253.0 |

Example 3 (comparative)

A polyester blend containing phosphite is prepared as in Example 2 except that the maximum temperature setting of the extruder is raised to 300 °C. The same DSC tests are performed on the extruded blend. The test results are listed below:

| | | $\Delta H_f$(J/g) | Tm (°C) |
|---|---|---|---|
| Isothermal Test: | Original<br>30 min./300 °C | 9.7<br>6.2 | 253.7<br>247.0 |
| Cycle Test: | 2nd. Cycle<br>8th. Cycle | 7.7<br>6.4 | 253.7<br>247.0 |

From the above, it can be seen that when the extrusion temperature is raised from 285 °C (Example 2) to 300 °C (Example 3), a substantial change of the heat of fusion results. Moreover, it can be seen from the data above that in both Examples 1 and 2 as the sample materials are heated for various periods of time, a melting point shifting to lower temperatures is observed. Both the shifting of the melting point to lower temperatures and the reduction of the heat of fusion are indications that ester exchange reactions are taking place in the extrudate.

Example 4 (comparative)

A polyester blend containing carbodiimide is prepared and extruded from the following ingredients:

| Raw Materials | Parts by Weight |
|---|---|
| Ardel (D-100)[1] | 50.0 |
| Calibre (300-15)[2] | 20.0 |
| Cleartuf (1006B)[3] | 23.3 |
| KE7646[4] | 6.7 |

[1]Trademark, Amoco Performance Products, Inc., polyarylate
[2]Trademark, Dow Chemical Co., polycarbonate
[3]Trademark, Goodyear Chemicals, polyethylene terephthalate
[4]KE7646 is a concentrate of polyethylene terephthalate with 15% of Aromatic polycarbodiimide (P-100) from Mobay Chemical Co., Rhein-Chemie Div., Mogadove, OH.

The maximum temperature setting for the extruder is 280 °C. The results of DSC isothermal tests preformed on samples of the extrudate of this example are shown in the following:

| | | $\Delta H_f$(J/g) | Tm (°C) |
|---|---|---|---|
| Isothermal Test: | Original | 12.3 | 247 |
| | 30 min./300 °C | 1.4 | 245 |

The substantial change of the heat of fusion indicates that ester exchange reactions are taking place in the extrudate. Thus, carbodiimide by itself is not sufficient to inhibit such reactions in the polyester.

Example 5 (comparative)

A polyester blend containing a hindered phenol is made and extruded from the following ingredients:

| Raw Materials | Parts by Weight |
|---|---|
| Ardel (D-100)[1] | 50 |
| Calibre (300-15)[2] | 20 |
| Cleartuf-2% Ethanox 330[3] | 30 |

[1]Trademark, Amoco Performance Products, Inc., polyarylate
[2]Trademark, Dow Chemical Co., polycarbonate
[3]Manufactured by Goodyear Chemical Co., polyethylene terephthalate with 2% Ethanox 330 (trademark, Ethyl Corp., Baton Rouge, LA.), antioxidant (hindered phenol)

The sample after being isothermally held at 280 °C for 10 minutes gives no heat of fusion nor melting point (i.e., no melting endotherm). This shows that a hindered phenol by itself is not sufficient to supress ester exchange reactions.

Example 6

A polyester blend containing phosphite and carbodiimide is extruded from the following ingredients:

| Raw Materials | Parts by weight |
|---|---|
| Ardel (D-100)[1] | 50.0 |
| Calibre (300-15)[2] | 15.0 |
| Cleartuf (1006B)[3] | 28.3 |
| Concentrate from Ex. 2 | 5.0 |
| KE7646[4] | 1.7 |

[1]Trademark, Amoco Performance Products, Inc., polyarylate
[2]Trademark, Dow Chemical Co., polycarbonate
[3]Trademark, Goodyear Chemicals, polyethylene terephthalate
[4]KE7646 is a concentrate of polyethylene terephthalate with 15% of Aromatic polycarbodiimide (P-100) from Mobay Chemical Co.

The extruder temperature (300 °C) set in Example 3 is employed. The DSC isothermal and cycle test results for the composition prepared according to this example are listed below:

| | | $\Delta H_f$(J/g) | Tm (°C) |
|---|---|---|---|
| Isothermal Test: | Original | 12.2 | 249.7 |
| | 30 min./300 °C | 12.0 | 249.7 |
| Cycle Test: | 2nd. Cycle | 12.6 | 252.4 |
| | 8th. Cycle | 11.2 | 253.0 |

Example 7

The procedure of Example 6 is repeated except that the extrusion temperature is raised to 325 °C. The DSC results of both isothermal and cycle tests on the extrudate of this example are listed in the following: DSC test is listed in the following:

| | | $\Delta H_f$(J/g) | Tm (°C) |
|---|---|---|---|
| Isothermal Test: | Original | 7.7 | 251.8 |
| | 30 min./300 °C | 5.3 | 244.4 |
| Cycle Test: | 2nd. Cycle | 6.5 | 252.4 |
| | 8th. Cycle | 7.9 | 251.1 |

Example 8

A polyester blend containing phosphite, carbodiimite and hindered phenol according to this invention is made and extruded from the following ingredients:

| Raw Materials | Parts by Weight |
|---|---|
| Ardel (D-100)[1] | 50.0 |
| Calibre (300-15)[2] | 15.0 |
| Cleartuf (1006B)[3] | 18.3 |
| Concentrate from Ex. 2 | 5.0 |
| KE7646[4] | 1.7 |
| Cleartuf-2% Ethanox 330[5] | 10.0 |

[1]Trademark, Amoco Performance Products, Inc., polyarylate
[2]Trademark, Dow Chemical Co., polycarbonate

[3]Trademark, Goodyear Chemicals, polyethylene terephthalate
[4]KE7646 is a concentrate of polyethylene terephthalate with 15% of Aromatic polycarbodiimide (P-100) from Mobay Chemical Co.
[5]Trademark, Ethyl Corp., hindered phenol

The maximum temperature of the extruder is 325 ° C. The results of both isothermal and cycling DSC tests performed on samples of the extrudate are listed below:

| | | $\Delta H_f$(J/g) | Tm (° C) |
|---|---|---|---|
| Isothermal Test: | Original<br>30 min./300 ° C | 11.8<br>13.3 | 252.0<br>248.0 |
| Cycle Test: | 2nd. Cycle<br>8th. Cycle | 13.7<br>13.7 | 253.0<br>251.7 |

From the above examples, it can be seen that at the extrusion temperature of 285 ° C, a phosphite compound is adequate for suppressing the ester exchange reaction at a post-processing temperature of 280 ° C. However, when either the extrusion temperature and/or the post-processing temperature is raised to 300 ° C, the use of a phosphite compound alone is not adequate enough.

At the extrusion and/or post-processing temperature of 300 ° C and above, a combination of phosphites and carbodiimides is necessary in order to suppress the ester exchange reaction especially the shifting of melting points towards lower temperature.

When the temperature is further raised to 325 ° C, a combination of phosphites, carbodiimides, and substituted phenols is used to effectively suppress the ester exchange reaction.

## Claims

1. A mouldable composition comprising a polymer blend containing a polyester and a stabiliser system for retarding transesterification in the polymer blend during processing thereof at a temperature above 285 °C, wherein the stabiliser system comprises:
   (A) phosphite compound;
   (B) carbodiimide compound and optionally,
   (C) hindered phenol compound,
   wherein said stabiliser system comprises at least 51 weight percent phosphite compound.

2. A composition according to claim 1, wherein said stabiliser system comprises between 51 and 75 weight percent of said phosphite compound.

3. A composition according to claim 1, wherein said phosphite compound is selected from organophosphite and inorganic phosphite compounds.

4. A composition according to claim 3, wherein said organophosphite contains at least one phenyl group.

5. A composition according to any one of the preceding claims wherein, the polymer blend comprises:
   (I) aromatic compound selected from the group consisting of; polysulfone, polyarylsulfone, polyether ketone, polyester ether ketone and polyarylate, wherein the polyarylate is the reaction product of at least one dihydric phenol and at least one aromatic dicarboxylic acid;
   (II) polyester being the reaction product of an aliphatic or cycloaliphatic diol, or mixtures thereof and at least one aromatic dicarboxylic acid; and
   (III) at least one thermoplastic polymer selected from the group consisting of an aromatic polycarbonate, a styrene resin, a vinyl chloride polymer, a poly(arylether), a copolyetherester block copolymer, and a polyhydroxyether; and wherein said (A) and (B) are present in said composition in amounts so as to provide at least 0.1 weight percent phosphite compound and at least 0.01 weight percent said compound B, the weights percent of each stabiliser system component being based on the total weight of said polymer blend.

6. A composition according to claim 5, wherein said hindered phenol compound is present in said composition in an amount of at least 0.01 weight percent hindered phenol compound based on the total weight of said polymer blend.

7. A composition according to claim 5, wherein said composition comprises between 0.1 and 3 weight percent phosphite compound, between 0.01 and 1 weight percent said B and between 0.01 and 1 weight percent hindered phenolic compound, the weight percent of each stabiliser system component being based on the total weight of said polymer blend.

8. A composition according to claim 5, wherein said aromatic compound (I) is present in amount between 4 and 80 weight percent, said polyester (II) is present in an amount between 4 and 60 weight percent and said thermoplastic polymer (III) is present in an amount between 10 and 92 weight percent, the weight percent of each of said components (I), (II), and (III) being based on the total weight thereof.

9. A composition according to claim 5, wherein said aromatic compound (I) is polyarylate, said polyester (II) is polyethylene terephthalate, and said thermoplastic polymer (III) is polycarbonate.

10. A composition according to claim 9, wherein said stabiliser system comprises bis(2,4-di-t-butylphenyl), pentaerythritol diphosphite, benzene-2,4-diisocyanate-1,3,5-tris-(1-methylethyl)-homopolymer, and 1,3,5-trimethyl-2,4,6-tris-(3,5-di-tert-butyl-4-hydroxybenzyl) benzene.

11. A composition according to claim 5, wherein at least said component (II) or (III) has the ability to crystallise upon cooling.

## Patentansprüche

**1.** Formbare Zusammensetzung einer Polymermischung, welche ein Polyester und ein Stabilisatorsystem enthält, zur Verzögerung der Umesterung in der Polymermischung während deren Verarbeitung bei einer Temperatur über 285 °C, wobei das Stabilisatorsystem besteht aus:
(A) einer Phosphitverbindung;
(B) einer Carbodiimidverbindung und optional,
(C) einer verhinderten Phenolverbindung,
wobei genanntes Stabilisatorsystem mindestens 51 Gewichtsprozent der genannten Phosphitverbindung enthält.

**2.** Zusammensetzung nach Anspruch 1, in welcher genanntes Stabilisatorsystem zwischen 51 und 75 Gewichtsprozent der genannten Phosphitverbindung enthält.

**3.** Zusammensetzung nach Anspruch 1, in welcher genannte Phosphitverbindung aus Organophosphiten und anorganischen Phosphitverbindungen ausgewählt wird.

**4.** Zusammensetzung nach Anspruch 3, in welcher genanntes Organophosphit zumindest eine Phenylgruppe enthält.

**5.** Zusammensetzung nach sämtlichen vorgenannten Ansprüchen, wobei die Polymermischung besteht aus:
(I) einem aromatischen Bestandteil, ausgewählt aus der Gruppe bestehend aus: Polysulfon, Polyarylsulfon, Polyetherketon, Polyesteretherketon und Polyarylat, wobei das Polyarylat ein Reaktionsprodukt von zumindest einem zweiwertigen Phenol und zumindest einer aromatischen Dicarbonsäure ist.
(II) Polyester, welches das Reaktionsprodukt eines aliphatischen oder cycloaliphatischen Diols oder Gemischen davon und zumindest einer aromatischen Dicarbonsäure ist; und
(III) zumindestens einem thermoplastischen Polymer, ausgewählt aus der Gruppe, welche besteht aus einem aromatischen Polycarbonat, einem Styrenharz, einem Vinylchloridpolymer, einem Poly-(arylether), einem Copolyetheresterblockcopolymer und einem Polyhydroxyether; und wobei genannte (A) und (B)-Anteile in genannter Zusammensetzung in solchen Mengen vorliegen, daß zumindest 0,1 Gewichtsprozent der Phosphitverbindung vorhanden sind, und zumindest 0,01 Gewichtsprozent genannten (B)-Anteils, wobei die Gewichtsprozentangaben zu jedem Bestandteil des Stabilisatorsystems auf dem Gesamtgewicht der genannten Polymermischung beruhen.

**6.** Zusammensetzung nach Anspruch 5, in welcher genannter Bestandteil des verhinderten Phenols in genannter Zusammensetzung vorliegt, und zwar in einer Menge von zumindest 0,01 Gewichtsprozent, basierend auf dem Gesamtgewicht genannter Polymermischung.

**7.** Zusammensetzung nach Anspruch 5, in welcher genannte Zusammensetzung zwischen 0,1 und 3 Gewichtsprozent Phosphitanteil enthalt, zwischen 0,01 und 1 Gewichtsprozent des genannten (B)-Anteils und zwischen 0,01 und 1 Gewichtsprozent des Anteils des verhinderten Phenols, wobei die Gewichtsprozentangaben von jedem Bestandteil des Stabilisatorsystems auf dem Gesamtgewicht der genannten Polymermischung beruhen.

**8.** Zusammensetzung nach Anspruch 5, in welcher genannte aromatische Verbindung (I) in einer Menge zwischen 4 und 80 Gewichtsprozent vorliegt, genanntes Polyester (II) in einer Menge zwischen 4 und 60 Gewichtsprozent vorliegt und genanntes thermoplastisches Polymer (III) in einer Menge zwischen 10 und 92 Gewichtsprozent vorliegt, wobei die Gewichtsprozentangaben von jedem genannten Bestandteil (I), (II) und (III) auf dem Gesamtgewicht der Zusammensetzung beruhen.

**9.** Zusammensetzung nach Anspruch 5, in welcher genannte aromatische Verbindung (I) Polyarylat ist, genanntes Polyester (II) Polyethylenterephthalat ist und genanntes thermoplastisches Polymer (III) Polycarbonat ist.

**10.** Zusammensetzung nach Anspruch 9, in welcher genanntes Stabilisatorsystem besteht aus Bis(2,4-di-t-butylphenyl) pentaerythritoldiphoshit, Benzen-2,4-diisocyanat-1,3,5-tris-1-methylethyl)-homopolymer und

1,3,5-Trimethyl-2,4,6-tris-(3,5-di-tert-butyl-4-hydroxy-benzyl) benzen.

**11.** Zusammensetzung nach Anspruch 5, in welcher zumindest genannter Bestandteil (II) oder (III) in der Lage ist, bei Erkalten zu kristallisieren.

## Revendications

**1.** Une composition de moulage comprenant un mélange de polymères contenant un polyester et un cocktail stabilisant pour retarder la transestérification qui se produit au sein du mélange de polymères pendant le mélangeage de ces derniers à une température supérieure à 285 °C, composition dans laquelle le cocktail stabilisant comprend :

A un composé de phosphite;

B un composé de cyanamide et en option,

C un composé phénolique encombré,

dans laquelle le dit cocktail stabilisant comprend au moins 51% en poids du composé de phosphite.

**2.** Une composition selon la revendication 1, dans laquelle ledit cocktail stabilisant comprend de 51 à 75% en poids dudit composé de phosphite.

**3.** Une composition selon la revendication 1, dans laquelle on choisit ledit composé de phosphite à partir de composés d'organophosphite et de phosphite inorganique.

**4.** Une composition selon la revendication 3, dans laquelle ledit organophosphite contient au moins un groupe phényle.

**5.** Une composition selon n'importe laquelle des revendications précédentes, dans laquelle le mélange de polymères comprend :

I un composé aromatique que l'on choisit dans le groupe qui est constitué de polysulfone, de polyaryl-sulfone, de polyéther-cétone, de polyester-éther-cétone et de polyarylate, dans lequel le polyarylate est le produit réactionnel d'au moins un diphénol et d'au moins un acide dicarboxylique aromatique;

II un polyester, produit réactionnel d'un dialcool aliphatique ou cycloaliphatique, ou de leurs mélanges et au moins un acide dicarboxylique aromatique; et

III au moins un polymère thermoplastique que l'on choisit dans le groupe qui est constitué de polycarbonate aromatique, de résine de styrène, de polymère de chlorure de vinyle, de poly-(aryléther), de copolymère en masse de copolyétherester, et le polyhydroxy-éther; et où lesdits stabilisants (A) et (B) sont présent dans ladite composition en quantités suffisantes pour apporter au moins 0,1% en poids de composé de phosphite et au moins 0,01% en poids dudit composé B, le pourcentage en poids de chacun des composants du cocktail stabilisant étant calculé par rapport au poids total dudit mélange de polymères.

**6.** Une composition selon la revendication 5, dans laquelle ledit composé phénolique encombré est présent dans ladite composition en quantités supérieures ou égales à 0,01% en poids par rapport au poids total dudit mélange de polymères.

**7.** Une composition selon la revendication 5, dans laquelle ladite composition contient de 0,1 à 3% en poids de composé de phosphite, de 0,01 à 1% en poids dudit stabilisant (B) et de 0,01 à 1% en poids de composé phénolique encombré, le pourcentage en poids de chacun des composants du cocktail stabilisant étant calculé par rapport au poids total dudit mélange de polymères.

**8.** Une composition selon la revendication 5, dans laquelle ledit composé aromatique (I) est présent en quantités comprises dans un intervalle allant de 4 à 80% en poids, dans laquelle ledit polyester (II) est présent en quantités comprises dans un intervalle allant de 4 à 60% en poids et dans laquelle ledit polymère thermoplastique (III) est présent en quantités comprises dans un intervalle allant de 10 à 92% en poids, le pourcentage en poids de chacun desdits composants (I), (II) et (III) étant calculé par rapport au poids total de ladite composition.

**9.** Une composition selon la revendication 5, dans laquelle ledit composé aromatique (I) est un polyarylate, ledit polyester (II) est un téréphtalate de polyéthylène, et ledit polymère thermoplastique (III) est un polycarbonate.

**10.** Une composition selon la revendication 9, dans laquelle ledit cocktail stabilisant comprend du diphosphite de bis-(2,4-di-t-butyl-phényl)-pentaérythritol, de l'homopolymère de benzène-2,4-diisocyanate-1,3,5-tris-(1-méthyl-éthyle), et du 1,3,5-triméthyl-2,4,6-tris(3,5-di-tert-butyl-4-hydroxy-benzyl)-benzène.

**11.** Une composition selon la revendication 5, dans laquelle ledit composant (II) ou (III), au moins, a la faculté de cristalliser en refroidissant.